# EUROPÄISCHE PATENTANMELDUNG

(11) **EP 4 368 019 A1**
(43) Veröffentlichungstag der Anmeldung: **15.05.2024**
(21) Anmeldenummer: 23000153.9
(22) Anmeldetag: 06.11.2023
(51) Int. Cl.: A01M 29/30

(54) **VORRICHTUNG ZUR ABWEHR VON TIEREN, INSBESONDERE VÖGELN, VORZUGSWEISE VON TAUBEN**

(30) Priorität: 08.11.2022 DE 102022004178
(71) Anmelder: Ziwi Vertriebs GmbH, 71334 Waiblingen (DE)
(72) Erfinder: MISKALE, Pavol, 70734 Fellbach (DE); WIRTH, Jürgen, 70734 Fellbach (DE)
(74) Vertreter: Kohl, Karl-Heinz

(57) **Zusammenfassung**

Die Abwehrvorrichtung (1) ist zur Abwehr von Tieren, insbesondere von Vögeln, vorzugsweise von Tauben, vorgesehen. Sie weist mindestens einen Träger (2) auf, an dem mehrere Halteteile (4) befestigt sind, auf denen jeweils ein Schließteil (5) verstellbar angeordnet ist. Um in einfacher und kostengünstiger Weise einen Zutritt von Tieren in einen solchen Zwischenraum sicher zu verhindern, hat das Schließteil (5) zumindest im Bereich seines freien Endes (5a) größere Breite hat als das Halteteil (4). Dadurch können die Halteteile (4) in größeren Abständen am Träger (2) befestigt werden, ohne dass die Sperrwirkung beeinträchtigt ist.

## Beschreibung

Die Erfindung betrifft eine Abwehrvorrichtung zur Abwehr von Tieren, insbesondere von Vögeln, vorzugsweise von Tauben, nach dem Oberbegriff des Anspruches 1.

Die DE 10 2012 024 377 A1 beschreibt eine Abwehrvorrichtung zur Abwehr von Vögeln mit wenigstens einem Träger, an dem U-förmige Abwehrteile aus Draht vorgesehen sind. Diese Abwehrteile sind dabei durch am Träger vorgesehene Halterungen steckbar und dienen dazu, Zwischenräume z.B. zwischen Photovoltaik- oder Sonnenkollektormodulen und Dachelementen gegen den Zutritt der Vögel zu sperren.

Der Erfindung liegt die Aufgabe zugrunde, die gattungsgemäße Abwehrvorrichtung so auszubilden, dass in einfacher und kostengünstiger Weise ein Zutritt von Tieren, insbesondere Vögeln, wie Tauben und dgl., in einen solchen Zwischenraum sicher verhindert wird.

Diese Aufgabe wird bei der erfindungsgemäßen Abwehrvorrichtung mit den Merkmalen des Anspruches 1 gelöst. Anspruch 14 befasst sich mit einem Verfahren zur Anbringung einer solchen Abwehrvorrichtung.

Eine erfindungsgemäße Abwehrvorrichtung hat den Träger, der vorteilhaft länglich ausgebildet ist. An dem Träger sind die Halteteile befestigt. Auf den Halteteilen ist jeweils ein Schließteil verstellbar angeordnet, das zusammen mit dem Halteteil ein konstruktiv einfach ausgebildetes, gegen Verbiegen und Verschieben sicheres Abwehrteil bildet.

Da das Schließteil zumindest im Bereich seines freien Endes größere Breite als das Halteteil hat, können die Halteteile in größeren Abständen am Träger befestigt werden, ohne dass die Sperrwirkung beeinträchtigt ist.

Der Träger lässt sich bevorzugt in geeigneter Weise so an einem Bauteil, beispielsweise einem Solar- oder Photovoltaikmodul, befestigen, dass die Abwehrteile den Abstand zwischen einem solchen Bauteil und einem Gebäudedach überbrücken und damit einen Zwischenraum versperren können. Die Abwehrteile verhindern, dass Tiere, wie Marder, Vögel und dgl., in den Zwischenraum zwischen dem Bauteil und dem Gebäudedach gelangen. Die Tiere werden durch die Abwehrteile nicht verletzt, sondern lediglich am Zutritt gehindert, so dass die erfindungsgemäße Abwehrvorrichtung bedenkenlos eingesetzt werden kann.

Bei einer bevorzugten länglichen Gestaltung des Trägers ist dieser in seiner Längsrichtung um ein Vielfaches länger ist als in den beiden anderen Raumachsen (der Breite und der Dicke). Eine bevorzugte Länge des Trägers liegt zwischen 0,5 m und 1 m. Eine bevorzugte Breite des Trägers liegt zwischen 10 mm und 50 mm.

Die Schließteile können zumindest teilweise als Steckteile ausgebildet sein, die sich einfach auf den Halteteilen anbringen lassen.

Eine besonders einfache, kostengünstige Ausbildung ergibt sich, wenn die Schließteile rohrförmig ausgebildet sind.

Die Halteteile sind vorteilhaft längliche stiftartige Elemente. Sie sind kürzer als der Träger, aber länger als dessen Breite. Eine bevorzugte Länge der Halteteile liegt zwischen 40 mm und 190 mm, sie kann aber je nach Anwendung auch länger sein. Ihr Durchmesser liegt bevorzugt zwischen 1 mm und 5 mm.

Die Halteteile sind mit ihren Endbereichen mit Abstand voneinander in Längsrichtung des Trägers befestigt. Sie stehen vorzugsweise rechtwinklig über einen Längsrand des Trägers vor, derart, dass die Halteteile und der Träger ein kammartiges Gebilde bilden. Der Abstand zwischen den Halteteilen liegt bevorzugt zwischen 10 mm und 100 mm. Der Abstand ist von der Größe der Tiere abhängig, die abgewehrt werden sollen. Bei kleinen Tieren, wie Vögeln ist der Abstand kleiner als bei größeren Tieren.

Das Halteteil kann über beide Längsränder des Trägers vorstehen. Vorteilhaft ist der in montierter Lage dem Dach zugewandte Abschnitt des Halteteiles länger als der nach oben überstehende Teil. Der nach oben überstehende Abschnitt des Halteteiles kann z.B. ein Absetzen von Vögeln, insbesondere Tauben, auf dem oberen Rand des Trägers verhindern. Der in montierter Lage nach unten über den Träger ragende, längere Halteteilabschnitt trägt das jeweilige Schließteil. Wenn die Halteteile nicht nach oben über den Träger vorstehen, ist nach oben hin eine gerade Abschlusskante der Abwehrvorrichtung gebildet.

Die Schließteile sind vorzugsweise rohr- bzw. hülsenförmige Elemente, die insbesondere kürzer sind als die Halteteile, aber bevorzugt länger als die Breite des Trägers sind. Eine bevorzugte Länge der Halteteile liegt zwischen 30 mm und 90 mm, kann aber je nach Anwendung auch länger sein. Die Wandstärke liegt bevorzugt zwischen 0,1 mm und 2 mm.

Auch wenn nur einigen Halteteilen (z.B. nur jedem zweiten) ein Schließteil zugeordnet ist, ist es sehr vorteilhaft, wenn alle Halteteile ein Schließteil aufweisen.

Die Halteteile und Schließteile sind vorteilhaft teleskopartig verlängerbar. Dies bedeutet, dass die Schließteile entlang der Längsachse des Halteteiles (welche auch der Längsachse des Schließteiles entspricht) parallel zu dieser zueinander verschoben werden können. Bevorzugt sind Halteteil und Schließteil koaxial zu einander angeordnet. Sie bilden damit gemeinsam ein Abwehrteil, das an einer Seite mit dem Träger verbunden und dessen Länge veränderbar ist.

Die Länge des resultierenden Abwehrteiles ist vorteilhaft um ein Mehrfaches größer als die Trägerbreite. Der Träger kann dabei auch sehr schmal ausgebildet sein, so dass er auch an schmalen Bauteilen befestigt, z.B. verklebt oder verschraubt werden kann. Die sehr langen Abwehrteile können dann einen großen Abstand zwischen dem Bauteil und dem Gebäudedach überbrücken.

Vorteilhaft ist der Träger band- oder streifenförmig ausgebildet. Er nimmt dadurch in der Einbaulage der Abwehrvorrichtung nur wenig Raum in Anspruch. Der Träger wird dabei vorteilhaft durch ein Metallband gebildet. Es kann von einer Rolle abgewickelt und auf die erforderliche Länge abgetrennt werden.

Der Träger wie auch das Halteteil und das Schließteil bestehen in vorteilhafter Weise aus nicht rostendem Material, vorzugsweise aus Edelstahl oder Aluminium, können aber auch aus Kunststoff, wie z.B. Polycarbonat, bestehen.

Bei einer bevorzugten Abwehrvorrichtung entspricht der Durchmesser der Halteteile bezüglich Form und Größe dem Innendurchmesser der jeweils aufgeschobenen Schließteile (zumindest in einem Bereich des Halteteiles), wenn diese rohrförmig ausgebildet sind. Damit die Abwehrteile leicht in ihrer Länge veränderbar sind, kann der Innendurchmesser der Schließteile geringfügig größer sein als der Durchmesser der jeweiligen Halteteile.

Es ist aber auch möglich, den Innendurchmesser der Schließteile bei rohrförmiger Ausbildung so auf den Durchmesser der jeweiligen Halteteile abzustimmen, dass die Schließteile unter Überwindung einer vorgegebenen Reibkraft beweglich sind.

Der Durchmesser der Halteteile ist insbesondere größer als 1 mm, bevorzugt größer als 2 mm. Dies bedingt, dass die Halteteile stabil genug sind und sich nicht leicht verbiegen können. Der Durchmesser ist aber bevorzugt kleiner etwa 5 mm, damit die Abwehrvorrichtung nicht zu schwer ist. Hier sollte die Kraft und Masse der abzuwehrenden Tiere beachtet werden, um das richtige Material und einen geeigneten Durchmesser zu wählen.

Die Halteteile und damit auch die Schließteile können eckige Außen- bzw. Innenform haben, wie drei-, vier-, sechs- oder auf andere Weise mehreckig. Es ist jedoch insbesondere eine runde Querschnittsausbildung bevorzugt, da damit eine einfache Fertigung mit runden Halteteilen und runden Schließteilen möglich ist, die sehr preisgünstig bezogen werden können.

Gemäß einer bevorzugten Abwehrvorrichtung sind die Halteteile und die Schließteile so geformt, dass bei einer maximalen Länge des Abwehrteils ein weiteres teleskopartiges Verlängern blockiert wird. Dies ist vorteilhaft, damit die Schließteile nicht von den Halteteilen abrutschen können. Es ist dabei bevorzugt, dass das Halteteil und das Schließteil einen Blockierbereich aufweisen, wobei die Blockierbereiche so geformt sind, dass beim Aufeinandertreffen der Blockierbereiche eine Verlängerungsbewegung blockiert wird.

Beispielsweise kann das Halteteil an seinem vom Träger abgewandten Ende als Blockierelement eine Verdickung aufweisen, die dem Innendurchmesser des Schließteiles entspricht. Das Schließteil kann sich an seinem dem Träger zugewandten Ende etwas verjüngen (Blockierelement des Schließteiles). Trifft nun die Verdickung auf die Verjüngung, so wird die Verlängerungsbewegung blockiert.

Das Schließteil kann als Blockierelement auch an seiner dem Halteteil in montierter Lage zugewandten Innenseite eine oder mehrere Erhabenheiten, wie eine Auswölbung, einen Vorsprung oder dgl., aufweisen, die am jeweiligen Halteteil zur Lagesicherung mit geringer Vorspannung anliegt.

Bevorzugt sind die Halteteile in einem Winkel zwischen 70° und 110° zur Längsachse des Trägers ausgerichtet, insbesondere senkrecht zu dieser Längsachse. Damit sind die Halteteile und Träger kammförmig angeordnet, wobei die Halteteile die Zinken des "Kammes" bilden.

Die Halteteile sind bevorzugt parallel zueinander angeordnet, was in einer regelmäßigen Form der Abwehrvorrichtung resultiert.

Bevorzugt sind die Halteteile an den Träger angeschweißt, angeklebt, angeschraubt oder angenietet oder mittels Befestigungselementen gehalten.

Der Träger ist bevorzugt bandförmig ausgebildet. Seine Länge ist bevorzugt größer als 0,3 m, insbesondere größer als 0,5 m, und kann durchaus im Bereich zwischen 0,3 m bis 2 m liegen. Bevorzugt ist die Breite des Trägers größer als 0,1 m, damit er eine minimale Stabilität und Verwindungssteifigkeit hat. Die Breite sollte jedoch 0,1 m nicht übersteigen.

Gemäß einer bevorzugten Abwehrvorrichtung sind bei einer Mehrzahl der Abwehrteile (insbesondere bei allen Abwehrteilen) die Halteteile und die Schließteile so beweglich zueinander angeordnet, dass sich die Schließteile nicht allein durch ihr Gewicht bewegen können. Der Durchmesser eines Halteteiles ist dabei bevorzugt so auf den Innendurchmesser des Schließteiles abgestimmt, dass eine Bewegung nur unter Überwindung einer Reibkraft möglich ist. Je nach Höhe des abzusperrenden Zwischenraumes können somit die freien Enden der Schließteile individuell beliebig verschoben werden. Infolge des Reibschlusses bleiben die Abwehrteile in ihrer jeweiligen Lage.

Gemäß einer bevorzugten Abwehrvorrichtung sind bei einer Mehrzahl der Abwehrteile (insbesondere bei allen Abwehrteilen) die Halteteile und die Schließteile so beweglich zueinander angeordnet, dass sich die Schließteile alleine durch ihr Gewicht bewegen können. Der Durchmesser eines Halteteiles ist dabei geringfügig kleiner als der Innendurchmesser des Schließteiles. Dies hat den Vorteil, dass die Schließteile bei einer Ausrichtung nach unten selbsttätig so weit an den Halteteilen entlang rutschen können, bis sie an einen Anschlag stoßen, z.B. ein Gebäudedach. In einem solchen Fall ist es zweckmäßig, wenn die Schließteile anschließend so plastisch verformt werden, dass sie das in ihnen befindliche Halteteil verklemmen. Dadurch wird gewährleistet, dass die Schließteile nicht unbeabsichtigt zurückrutschen.

Bevorzugt hält ein abziehbares z.B. als Klebeband ausgebildetes Fixierteil die Halteteile und ihre jeweiligen Schließteile, was einen Einbau und den Transport erleichtert, da es nicht zu ungewollten Verschiebungen von Schließteilen kommen kann.

Grundsätzlich können die Schließteile außer der vorteilhaften Rohrform auch eine Ausbildung haben, bei der die Schließteile ein hülsen- bzw. rohrförmiges Anschlussstück haben. Es ist auf dem Halteteil verschiebbar und mit von ihm abstehenden Sperrteilen versehen, die in Verschieberichtung verlaufen. Die Sperrteile können jede geeignete Form haben.

Bevorzugt sind an dem Träger Klemmelemente angeordnet, mit denen der Träger an der Tragestruktur, z.B. an einer Leiste eines umlaufenden Rahmens der Tragestruktur, verklemmt werden kann. Dadurch kann die Abwehrvorrichtung sehr einfach und evtl. werkzeuglos montiert werden.

Die Klemmelemente sind bevorzugt U-förmig ausgestaltet, so dass sie auf eine Leiste aufgeschoben werden können, die sie von zwei Seiten und zumindest teilweise umfassen können. Die Klemmelemente sind dabei bevorzugt aus einem elastischen Material gefertigt, so dass die freien Enden der U-förmigen Klemmelemente eine Kraft aufeinander ausüben, wenn sie auf einer Leiste entsprechender Dicke aufgeschoben sind. Sie drücken also von beiden Seiten auf die einander gegenüberliegenden Oberflächen der Leiste. Bevorzugt liegt die Öffnung der Klemmelemente auf derjenigen Seite des Trägers, an der die Halteelemente nach unten ragen.

Der Träger kann dazu als Winkelprofil oder als flache Leiste ausgebildet sein. Hat der Träger ein Winkelprofil, können die Halteteile an der Oberfläche eines ersten Schenkels des Winkels befestigt sein und die Klemmelemente an der Oberfläche des zweiten Schenkels.

Alternativ kann der Träger als Leiste ausgebildet und orthogonal zu den Halteteilen ausgerichtet sein, wenn die Halteteile an ihren dem Träger zugewandten Ende abgewinkelt und mit den abgewinkelten Bereichen auf der Unterseite der Leise befestigt sind. Die Klemmelemente können dann auf der der Unterseite gegenüberliegenden Oberseite des Trägers angebracht sein.

Ist der Träger als Leiste ausgebildet und parallel zu den Halteteilen ausgerichtet, dann haben die Klemmelemente bevorzugt eine U-Form mit einer L-förmig angeschlossenen Befestigungslippe, so dass sie weitgehend einem "P" entsprechen. Die Halteteile sind dann an einer ersten Seite des Trägers angebracht. Die Klemmelemente können dann mit ihrer Befestigungslippe ebenfalls an dieser Seite oder an der gegenüberliegenden zweiten Seite des Trägers befestigt sein.

Die Klemmelemente können zumindest teilweise eine rutschfeste Beschichtung aufweisen oder eine Beschichtung mit einem aktivierbaren Klebstoff, der z.B. durch Wärme aktiviert werden kann.

Die Klemmelemente können aus demselben Material gefertigt sein wie die Leiste und mit ihr insbesondere mittels Löten, Schweißen, Kleben, Schrauben oder Nieten verbunden sein. Schrauben oder Nieten können dabei den Klemmeffekt durch ihre Köpfe noch verbessern.

Die U-förmigen Klemmelemente können auf dem dem Träger abgewandten oberen Schenkel eine Wellenform haben, die die Klemmwirkung verbessert. In das Innere der U-förmigen Klemmelemente hineinragende, aus dem Klemmelement ausgebogene Spitzen können Widerhaken bilden und/oder ein schwalbenschwanz-förmiges freies Ende des oberen Schenkels eine Anbringung erleichtert. Der dem Träger abgewandte obere Schenkel eines Klemmelements ist bevorzugt länger als der am Träger angebrachte untere Schenkel. Auf einem Träger sind bevorzugt zwei oder mehr Klemmelemente angeordnet.

Die Klemmelemente erfüllen die zusätzliche Aufgabe, dass die Abwehrvorrichtung sehr schnell und dennoch sicher an einer Tragestruktur angebracht werden kann. Diese Ausführungsform ist auch für eine Abwehrvorrichtung ohne das erfindungsgemäße Arrangement aus Halteteilen und Schließteilen vorteilhaft.

Nachfolgend wird eine Anbringung allgemein beschrieben: Das erfindungsgemäße Verfahren zur Anbringung einer erfindungsgemäßen Abwehrvorrichtung an einer Tragestruktur, welche über einer Fläche, insbesondere über einem Dach, angeordnet ist, bevorzugt an einer Tragestruktur einer Photovoltaikanlage oder Solarthermieanlage, umfasst die folgenden Schritte:
- Anbringen des Trägers an der Tragestruktur so dass die Schließteile der Abwehrvorrichtung der Fläche (z.B. dem Dach) zugewandt sind,
- Relativverstellen der Schließteile gegenüber den Halteteilen in ihre Schließstellung zu einer abzudichtenden Fläche (z.B. dem Dach),
- optional: Fixieren der vom Träger abgewandten Endbereiche der Schließteile an der Fläche (z.B. am Dach).

Bei einem bevorzugten Verfahren für Abwehrteile, deren Schließteile so beweglich zu ihren Halteteilen angeordnet sind, dass sie sich nicht alleine durch ihr Gewicht bewegen können, werden die Schließteile herausgezogen oder geschoben, bis sie die Fläche (z.B. das Dach) berühren, und werden dann bevorzugt an der Fläche (z.B. am Dach) befestigt, insbesondere durch Kleben, Schweißen, Löten, Nieten oder Schrauben.

Bei einem bevorzugten Verfahren für Abwehrteile, deren Schließteile so beweglich zu ihren Halteteilen angeordnet sind, dass sie sich alleine durch ihr Gewicht bewegen können, wird ein Klebeband, welches die Halteteile und ihre jeweiligen Schließteile fixiert, nach dem Anbringen des Trägers abgezogen. Die Schließteile fallen dann automatisch in die gewünschte Position und können dort auch fixiert werden.

Bei einem bevorzugten Verfahren für das Anbringen einer Abwehrvorrichtung kann sie erfindungsgemäß mit der Klemmelementen ausgestattet sein, so dass sie an der Tragestruktur angeklemmt wird. Die Abwehrvorrichtung kann dann unter Umständen werkzeuglos montiert werden, womit sich ihr Einsatz erheblich vereinfacht. Das Anklemmen ermöglicht insbesondere ein einfaches Nachrüsten der Abwehrvorrichtung an bestehenden Photovoltaik- oder Solatthermieanlagen.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind. Weitere Merkmale der Erfindung ergeben sich aus den weiteren Ansprüchen, der Beschreibung und den Zeichnungen.

Die Erfindung wird anhand der in den Zeichnungen dargestellten Ausführungsbeispiele näher erläutert. Es zeigen
- Fig. 1: eine perspektivische Darstellung einer erfindungsgemäßen Abwehrvorrichtung,
- Fig. 2: ein Anwendungsbeispiel einer erfindungsgemäßen Abwehrvorrichtung,
- Fig. 3: eine zweite Ausführungsform einer erfindungsgemäßen Abwehrvorrichtung zur Abwehr von Tieren, insbesondere Vögeln, von vorne mit einem vergrößerten Bereich,
- Fig. 4: in vergrößerter Darstellung einen Schnitt längs der Linie A - A in Fig. 3,
- Fig. 5: eine Abwehrvorrichtung gemäß Fig. 3 von oben mit einem vergrößerten Bereich,
- Fig. 6: eine perspektivische Darstellung einer weiteren erfindungsgemäßen Abwehrvorrichtung mit Klemmelementen,
- Fig. 7: eine perspektivische Teilansicht einer weiteren erfindungsgemäßen Abwehrvorrichtung mit Klemmelementen,
- Fig. 8: die Abwehrvorrichtung der Figur 7 in Seitenansicht,
- Fig. 9: die Abwehrvorrichtung der Figur 7 aus einer weiteren perspektivischen Ansicht,
- Fig. 10: eine perspektivische Teilansicht einer weiteren erfindungsgemäßen Abwehrvorrichtung mit Klemmelementen,
- Fig. 11: die Abwehrvorrichtung der Figur 10 in Seitenansicht,
- Fig. 12: die Abwehrvorrichtung der Figur 10 in einer weiteren perspektivischen Ansicht.

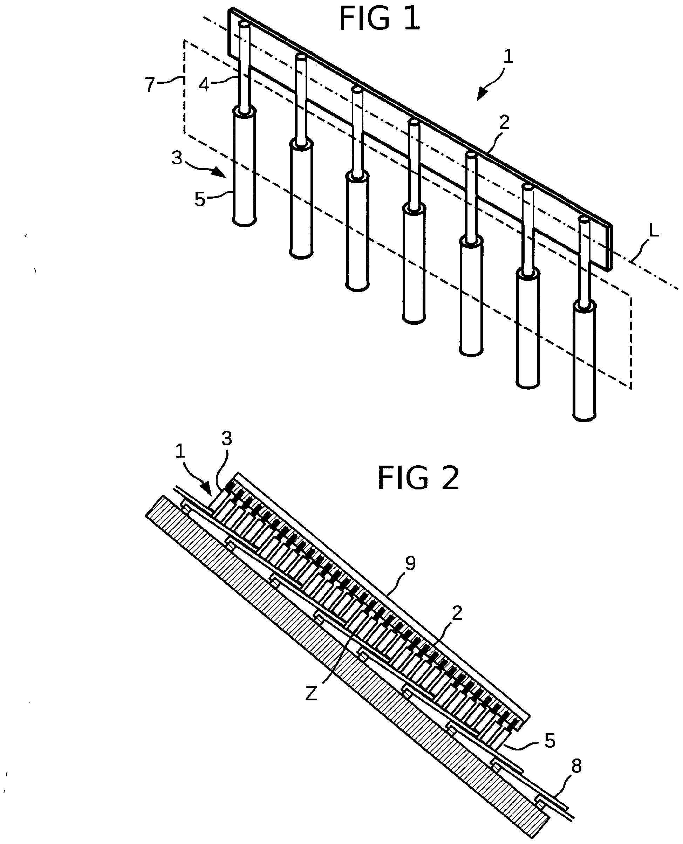

Die Abwehrvorrichtung 1 gemäß Fig. 1 ist z.B. auf einem Dach eines Gebäudes befestigt, wie in Fig. 2 näher dargestellt ist. Fig. 2 zeigt ein solches Gebäudedach mit Dachelementen 8, wie z.B. Dachziegeln, Dachplatten und dergleichen. Auf dem Dach sind funktionale Module befestigt, die Solarmodule, Photovoltaikmodule einer Solar-/Photovoltaikanlage sein können. Sie sind mit Hilfe von Tragestrukturen 9 mit einem Abstand oberhalb der Dachelemente 8 befestigt. Zwischen den Dachelementen 8 und den Modulen wird dadurch der Zwischenraum Z gebildet. Es hat sich gezeigt, dass Tiere, wie Marder, Vögel, insbesondere Tauben, in diesen Zwischenraum Z unterschlüpfen bzw. im Zwischenraum nisten. Dies wird durch die Abwehrvorrichtung 1 zuverlässig verhindert. Die Abwehrvorrichtung 1 lässt sich kostengünstig herstellen, einfach montieren und an die jeweiligen Einbau- bzw. Dachgegebenheiten einfach anpassen.

Die Abwehrvorrichtung 1 hat einen Träger 2 mit Abwehrteilen 3. Sie bestehen aus Halteteilen 4 und Schließteilen 5, die vorteilhaft verstellbar auf dem Träger 2 bzw. den Halteteilen 4 vorgesehen sind.

Der Träger 2 ist vorteilhaft band- oder leistenförmig ausgebildet. Vorteilhaft wird der Träger 2 durch ein Metallband gebildet, das nur geringe Dicke hat. Beispielsweise kann der Träger 2 eine Dicke von nur 1 mm und über seine Länge vorteilhaft konstante Breite haben. Der Träger 2 kann aus Endlosmaterial hergestellt und in einfacher Weise auf die gewünschte Länge abgetrennt werden. Aufgrund der geringen Dicke kann der Träger 2, wenn er aus Metall besteht, von einer Rolle abgewickelt werden. Der Träger 2 kann auch als Einzelteil gefertigt werden. Da auf einem Dach montierbare Module in der Regel genormte Außenmaße haben, können die Träger 2 in Standardmaßen gefertigt und geliefert werden. Der Träger 2 kann auch aus Kunststoff, wie z.B. Polycarbonat, bestehen.

Der Träger 2 kann seitlich am jeweiligen Modul in geeigneter Weise befestigt werden, wie angeklebt, angenagelt und dergleichen.

Der Träger 2 kann auch L-Form haben. Dann kann er auch an der Ober- oder Unterseite des Moduls befestigt werden.

An dem bandförmigen Träger 2 ist eine Vielzahl von Abwehrteilen 3 angebracht, von denen aus Gründen der besseren Übersicht nur einige mit Bezugszeichen versehen sind.

Die Halteteile 4 sind bevorzugt in regelmäßigen Abständen nebeneinander, z.B. alle 20 mm, fest mit dem Träger 2 verbunden, z.B. mittels Schweißen oder Kleben, und vorteilhaft senkrecht zu dessen Längsachse L ausgerichtet.

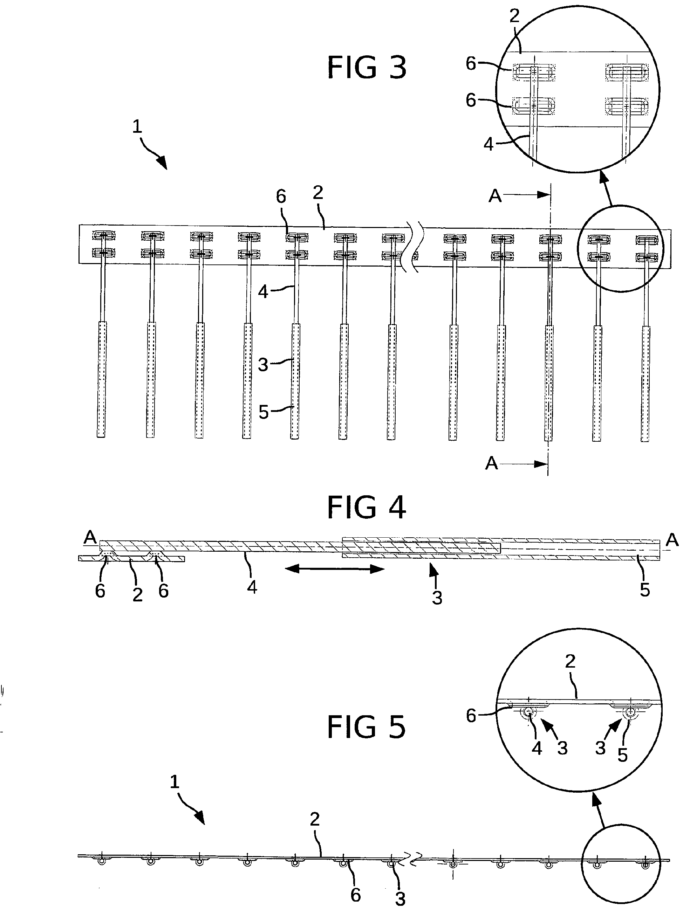

Die Halteteile 4 sind vorzugsweise stift- bzw. stabförmig ausgebildet und über vorteilhaft laschenartige Sicherungsteile 6 (Fig. 3 und 4) am Träger 2 befestigt. Vorteilhaft ragen die Halteteile 4 durch jeweils zwei mit Abstand übereinander am Träger 2 befestigte, vorzugsweise an ihm verschraubte Sicherungsteile 6. Selbstverständlich können auch beliebig andere Sicherungsteile zur Befestigung der Halteteile 4 am Träger 2 vorgesehen sein. Durch diese Zweipunkt-Sicherung mittels der Sicherungsteile 6 wird auf einfache Weise ein Verschieben und Verbiegen der Halteteile 4 verhindert, z.B. bei der Montage, dem Transport der Abwehrvorrichtung 1 oder wenn auf die Halteteile 4 z.B. über die Schließteile 5 Querkräfte wirken, z.B. wenn Tiere versuchen, in den Zwischenraum Z zu gelangen.

Die Sicherungsteile 6 können auch Auswölbungen des Trägers 2 sein, auf denen die Halteteile 4 verklebt, verlötet oder verschweißt sind. Sie könnten aber auch Befestigungselemente sein oder enthalten, z.B. Nieten, Schrauben oder Ösen.

Die Halteteile 4 können auf den Auswölbungen so befestigt werden, dass sie geringen Abstand vom Träger 2 haben (Fig. 4), was die Handhabung, insbesondere auch das Verschieben der Schließteile 5 auf den Halteteilen 4, erleichtert.

Im Ausführungsbeispiel sind die Halteteile 4 so am Träger 2 befestigt, dass ihr oberes Ende nicht über den in montierter Lage der Abwehrvorrichtungen 1 oberen Rand des Trägers 2 überstehen. Dadurch hat die Abwehrvorrichtung 1 einen glatten oberen Rand, an dem man nicht hängen bleiben kann, so dass eine Verletzungsbefahr bei der Handhabung der Abwehrvorrichtung einwandfrei verhindert ist.

Es ist aber auch möglich, die Halteteile 4 so am Träger 2 zu befestigen, dass zumindest einige von ihnen, vorzugsweise alle mit ihren oberen Enden über den Träger 2 vorstehen. Dies ist beispielsweise dann gewünscht, wenn die Vorrichtung 1 seitlich am Dach vorhandene Zwischenräume verschließen und zudem ein Absetzen z. B. von Vögeln, wie Tauben, verhindern soll.

Auf den nach unten über den Träger 2 ragenden freien Abschnitten der Halteteile 4 sind die Schließteile 5 angeordnet. Sie sind vorteilhaft durch Rohrstücke gebildeten, die auf den Halteteilen 4 teleskopartig verschiebbar angeordnet sind. Alle Schließteile 5 und alle Halteteile 4 sind vorzugsweise jeweils gleich ausgebildet. Die Schließteile 5 haben einen Innendurchmesser der nur geringfügig größer ist als der Außendurchmesser der Halteteile 4 (Fig. 5), so dass sie nur ein minimales Spiel gegenüber diesen haben und sich das Schließteil 5 dennoch leicht gegenüber dem Halteteil 4 verschieben lässt.

Vorteilhaft ist es, wenn in einem solchen Fall die Schließteile 5, wenn sie ihre Sperrlage gemäß Fig. 2 erreicht haben, anschließend plastisch zusammengedrückt werden, so dass sich eine Querschnittsverengung bildet, durch die die Schließteile 5 an die jeweiligen Halteteile 4 angepresst werden.

Durch die teleskopartige Anordnung der Sicherungsteile 5 gegenüber den Halteteilen 4 und ihre rohrförmige Ausbildung haben die Abwehrteile 3 eine hohe Biegesteifigkeit, so dass sie sich nicht ohne weiteres verbiegen lassen, wenn beispielsweise Tiere versuchen, zwischen benachbarten Schließteilen 5 in den Zwischenraum Z einzudringen. Die rohrförmige Ausbildung der Schließteile 5 hat ferner den Vorteil, dass dadurch der Abstand der einander benachbarten freien Enden 5a der Schließteile 5 relativ gering ist. Dies hat den weiteren Vorteil, dass bei Verwendung relativ weniger Absperrvorrichtungen 3 bzw. Halteteile 4 im unteren Bericht der Abwehrvorrichtung 1 nur kleine Spalte oder Lücken gebildet sind, die ein Durchschlüpfen von Tieren erheblich erschweren bzw. sogar ganz verhindern kann.

Anstelle der stabförmigen Halteteile 4 können z. B. auch leistenartige Halteteile vorgesehen sein, die mit einer Flachseite am Träger 2 befestigt werden können. In einem solchen Fall könnten die Schließteile z. B. auch durch beliebig andere, nicht rohrförmige Teile gebildet sein, die z.B. mit einem hülsenförmigen Anschlussstück auf den Halteteilen verschiebbar angeordnet sind. Die Schließteile könnten beispielsweise leistenartig oder beliebig andere Struktur haben. Z.B. können diese auch profiliert sein, indem an einem Grundkörper Sperrteile, wie Zacken, Stifte oder dgl. vorhanden sind, die seitlich vorstehen und dadurch den Spalt zwischen einander benachbarten Schließteilen weitgehend abschließen bzw. so verengen, dass Tiere nicht in den Zwischenraum gelangen können.

In Fig. 1 ist mit gestrichelten Linien ein Klebeband 7 dargestellt, welches nach dem Zusammenbau des Trägers 2 und der Abwehrteile 3 auf diese aufgeklebt werden kann. Es fixiert die lose auf den Halteteilen 4 sitzenden Schließteile 5 in ihrer Lage zu den jeweiligen Halteteilen 4 beim Transport und während der Montage. Das Klebeband 7 wird insbesondere dann eingesetzt, wenn die Schließteile 5 aufgrund ihres Eigengewichtes nach unten rutschen können.

Anstelle des Klebebandes 7 können aber auch andere Fixierteile, wie beispielsweise dünne Stäbe, Leisten oder dgl., eingesetzt werden, die mit einem Klebemittel versehen sind.

Die Schließteile 5 können auch so auf den Halteteilen 4 angeordnet sein, dass sie unter geringem Reibschluss auf ihnen sitzen. Z.B. können hierzu an der Innenseite der Schließteile 5 geringfügig in den Rohrquerschnitt ragende Erhabenheiten, wie Noppen, Wandverdickungen oder dgl. vorgesehen sein. Dann können sich die Schließteile 5 während des Transportes oder der Montage nicht unkontrolliert gegenüber den Halteteilen 4 verschieben. In diesem Fall können die Sicherungsteile 5 z.B. von Hand aus der durch Reibschluss gesicherten Lage unter Überwindung einer vorgegebenen Reibkraft in ihre Absperrstellung auf dem Dach verschoben werden.

Dann wäre z.B. ein plastisches Zusammendrücken der rohrförmigen Schließteile 5 nicht mehr notwendig. Sie würden dann in der beschriebenen Weise nicht automatisch in die gewünschte Position fallen, sondern müssten in die Sperrlage geschoben werden.

Bei einer solchen Ausbildung der Schließteile 5 ist es auch möglich, dass die Schließteile 5 vor der Montage auf den Halteteilen 4 in ihre maximale ausgezogene Lage verschoben werden, wobei nur eine geringe Kraft benötigt wird. Dann wird die Abwehrvorrichtung 1 auf das Dach aufgesetzt. Sobald die Schließteile 5 mit ihren Enden am Dach anliegen und der Träger 2 in seine Montageposition gebracht wird, verschieben sich die Halteteile 4 relativ zu den Schließteilen 5. Dadurch muss nicht jedes Schließteil 5 von Hand auf den Halteteilen 4 verschoben werden. Auf diese Weise gelangen die Schließteile 5 selbsttätig in ihre Einbaulage, die aufgrund der beschriebenen Ausbildung die Form des Daches kopieren. Sobald der Träger 2 seine Montageposition erreicht hat, wird er in der beschriebenen Weise am Dach bzw. an den funktionalen Modulen befestigt.

In der Darstellung gemäß Fig. 2 sieht man, dass die Lage der verstellbaren Schließteile 5 an die Form des Daches bzw. dessen Dachelemente 8 angepasst werden kann, um den Zwischenraum Z so dicht zu verschließen, dass kein Tier in diesen eindringen kann. Die Schließteile 5 stehen dabei vorzugsweise auf den Dachelementen 8 auf und könnten mit diesen auch noch zusätzlich verbunden werden, z.B. durch Kleben.

Der Träger 2 kann auch so montiert werden, dass er zunächst am Rand des Moduls an dessen Tragestruktur 9 befestigt wird. Wie hier gezeigt, kann der Träger 2 eine wesentlich kleinere Breite als die Tragestruktur 9 haben. Infolge seiner geringen Breite lässt sich der Träger 2 dann auch an dünneren Tragestrukturen 9 befestigen. Je nach Ausbildung der Tragestrukturen 9 kann der Träger 2 auf unterschiedliche Weise am Rand eines Moduls befestigt werden.

Der Träger 2 kann auch durch Kleben, Nieten oder Schrauben an den Tragestrukturen 9 befestigt werden. Insbesondere in dem vorangehend angesprochenen Fall, bei dem die Halteteile 4 und die Schließteile 5 so beweglich zueinander angeordnet sind, dass sich die Schließteile 5 alleine durch ihr Gewicht bewegen können, kann bei der Montage das in Fig. 1 gezeigte Klebeband 7 vorteilhaft verwendet werden. Bei der Montage fixiert das Klebeband 7 zunächst die Schließteile 5, so dass eine Anbringung des Trägers 2 an der Tragestruktur 9 sehr einfach erfolgen kann. Nach der Befestigung des Trägers 2 an der Tragestruktur 9 kann das Klebeband 7 abgezogen werden. Die Schließteile 5 können dann von selbst in die gewünschte Position auf den Halteteilen 4 nach unten rutschen, bis sie an den Dachelementen 8 anliegen.

Die Schließteile 5 können stufenlos verstellt werden, so dass sie bis zur Anlage an den Dachelementen 8 kommen. Aufgrund der Verschiebbarkeit können die Schließteile 5 den Zwischenraum Z zwischen den Dachelementen 8 und der Unterseite der Module sicher für Tiere verschließen.

Je nach Art der Tiere, die am Zutritt zum Zwischenraum Z gehindert werden sollen, kann der Abstand zwischen den Abwehrteilen 3 auf dem Träger 2 unterschiedlich gestaltet sein. Es können Träger 2 eingesetzt werden, auf denen die Abwehrteile 3 bzw. deren Halteteile 4 jeweils unterschiedliche Abstände voneinander haben, so dass der Anwender die zur Abwehr der entsprechenden Tierart geeignete Abwehrvorrichtung 1 einsetzen kann. Es ist aber auch möglich, von vornherein den Abstand zwischen den Abwehrteilen 3 bzw. den Halteteilen 4 des Trägers 2 so klein zu halten, dass auch sehr kleine Tiere, beispielsweise kleine Vögel, nicht zwischen den Abwehrteilen 3 hindurch in den Zwischenraum Z gelangen können.

Der Träger 2 und die Abwehrteile 3 bestehen vorteilhaft aus korrosionsbeständigem Material, vorzugsweise aus Edelstahl, so dass eine lange Lebensdauer der Abwehrvorrichtung 1 gewährleistet ist. Die Abwehrvorrichtung 1 lässt sich an allen Seiten eines Moduls in der beschriebenen Weise befestigen, so dass der Zwischenraum Z zwischen den Dachelementen 8 und dem Modul nach allen Seiten geschlossen werden kann.

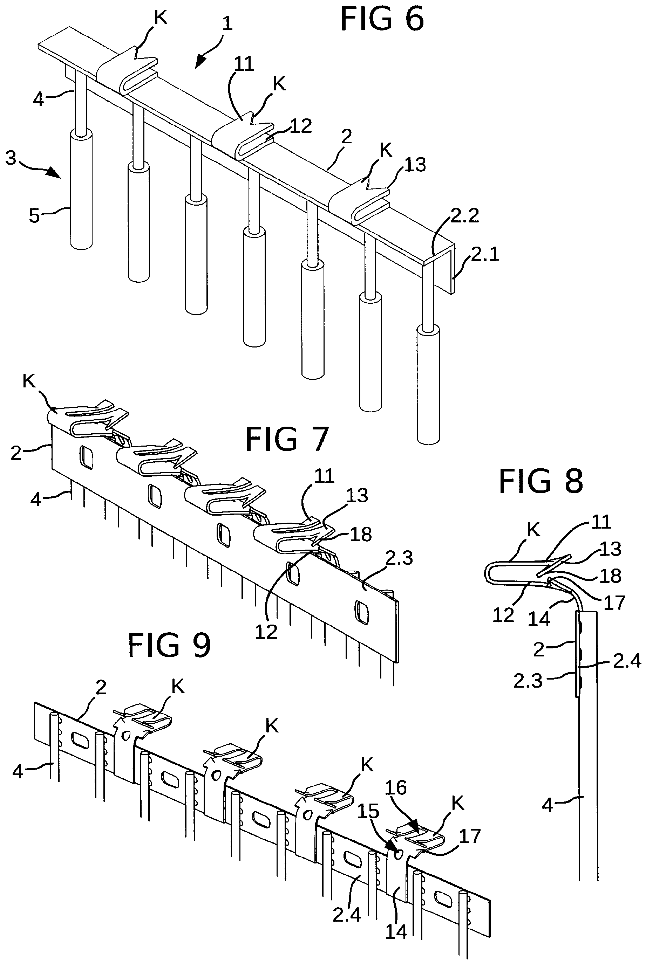

Figur 6 zeigt eine perspektivische Darstellung einer erfindungsgemä-ßen Abwehrvorrichtung 1 mit beispielhaft drei in einem Querschnitt U-förmigen Klemmelementen K mit zwei einander gegenüberliegenden U-Schenkeln, einem oberen Schenkel 11 und einem unteren Schenkel 12. Die Klemmelemente K dienen dazu, den Träger 2 der Abwehrvorrichtung 1 an einer Tragestruktur 9 (s. z.B. Figur 2) zu verklemmen. Der Träger 2 ist als Winkelprofil ausgebildet. Die Halteteile 4 sind an einem ersten, abwärts gerichteten Schenkel 2.1 des Winkelprofils wie oben beschrieben befestigt. Die Klemmelemente K sind mit dem unteren Schenkel 12 am Träger 2 angeschweißt oder angeklebt, sie können aber z.B. auch genietet sein.

Die Klemmelemente K können aus Metall, aber auch aus hartem Kunststoff bestehen.

An dem zweiten, waagrechten Schenkel2.2 des winkeligen Trägers 2 sind oberseitig die drei Klemmelemente K angebracht, so dass sie zu derjenigen Seite des Trägers 2 offen sind, an der die Halteteile 4 abwärts gerichtet sind. Da Tragestrukturen 9, wie z.B. Solarmodule, an ihrer Unterseite oftmals mit nach innen ragenden Leisten z.B von umlaufenden Winkelprofilen eines Rahmens abschließen, kann die Abwehrvorrichtung 1 dann mit den offenen Seiten der Klemmelemente K nach außen zeigend und - von der Tragestruktur 9 aus gesehen - von innen nach außen auf die Leiste der Tragestruktur 9 aufgeschoben werden.

Die freien Enden 13 der oberen U-Schenkel 11 der Klemmelemente K sind als Schwalbenschwanz geformt. Sie schließen mit dem Träger 2 ab, sie können aber auch über ihn hinausragen. Diese Formgestaltung erleichtert das Aufschieben der Klemmelemente K.

Die Schenkel 11, 12 des Klemmelementes K können so ausgebildet sein, dass sie beim Aufschieben auf die Tragstruktur 9 elastisch verformt werden und unter elastischer Vorspannung an der Ober- und Unterseite der Tragstruktur 9 anliegen.

Figuren 7 bis 9 zeigen eine zweite Ausgestaltungsform der erfindungsgemäßen Abwehrvorrichtung 1. Deren Träger 2 ist als Leiste ausgeformt, deren Vorder- und Rückseite 2.3, 2.4 parallel zu den Halteteilen 4 ausgerichtet ist. Die Halteteile 4 können so wie in Figur 6 am Träger 2 angebracht sein, z.B. mit drei Punkten geschweißt.

Die Klemmelemente K verfügen über eine laschenförmige Befestigungslippe 14 (Fig. 8, 9), die an den unteren Schenkel 12 einstückig anschließt und L-förmig bzw. rechtwinklig und mit einem Biegeradius abwärts gebogen von ihm absteht. Um die rechtwinklige Biegung zwischen dem unteren Schenkel 12 und der Befestigungslippe 14 zu erleichtern, ist jedes Klemmelement K am Übergang zwischen dem unteren Schenkel 12 und der Befestigungslippe 14 vorteilhaft kreisförmig ausgestanzt und hat dort ein Durchgangsloch 15. Die Befestigungslippe 14 befestigt das jeweilige Klemmelement K auf derselben Rückseite 2.4 des Trägers 2, an der auch die Halteteile 4 angebracht sind.

Die oberen Schenkel 11 verfügen über einen Einschnitt 16, der von ihrem freien Ende 13 aus über nahezu ihre gesamte Länge hinweg reicht. Außerdem sind sowohl der obere Schenkel 11 als auch der untere Schenkel 12 jedes Klemmelements K beidseitig von einer Außenseite aus in einer Richtung auf das freie Ende 13 hin in einem Winkel von etwa 45° eingeschnitten. Aufgrund der Biegung zwischen dem unteren Schenkel 12 und der Befestigungslippe 14 entstehen durch die beidseitigen Einschnitte spitze Haken 17, die in das Innere des U-förmigen Klemmelements K hinein vorstehen. Die oberen Schenkel 11 der Klemmelemente K sind an ihren freien Enden 13 vom unteren Schenkel 12 weggebogen, so dass die dortigen Einschnitte spitze Haken 18 entstehen lassen, die ebenfalls in das Innere des U-förmigen Klemmelements K hinein vorstehen. Sie bilden Widerhaken, die ein Abrutschen des auf eine Leiste der Tragestruktur 9 (Fig. 2) aufgeschobenen Klemmelements K verhindern.

Wie Fig. 8 zeigt, liegen die Haken 17, 18 derart schräg zueinander, dass sie eine Einführöffnung begrenzen, die sich von außen nach innen verjüngt. Dadurch lassen sich die Klemmelemente K einfach auf die Tragestruktur 9 aufschieben.

Das Aufschieben wird auch dadurch erleichtert, das die Schenkel 11, 12 des Klemmelementes K mit Abstand oberhalb des leistenförmigen Trägers 2 liegen.

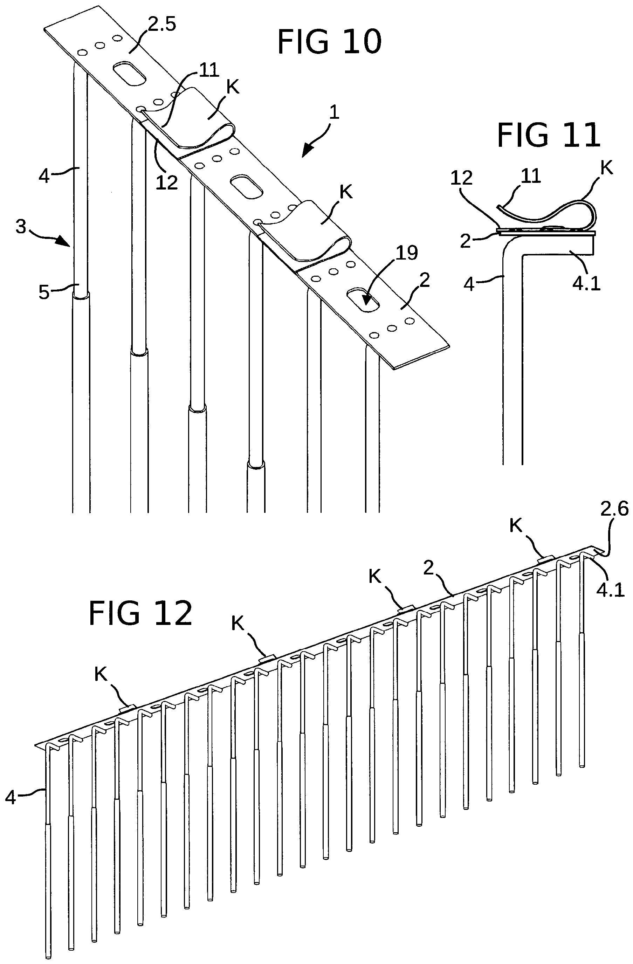

Figuren 10, 11 zeigen eine dritte Ausgestaltungsform der erfindungsgemäßen Abwehrvorrichtung 1. Der Träger 2 ist wiederum eine Leiste, deren Oberseite 2.5 (Fig. 10) und Unterseite 2.6 (Fig. 11) orthogonal zu den Halteteilen 4 ausgerichtet ist. Der obere Teil der Halteteile 4 ist abgewinkelt und bildet jeweils einen Befestigungsabschnitt 4.1 (Fig. 11, 12), der das Halteteil 4 auf der Unterseite 2.6 des Trägers 2 befestigt (Fig. 12), z.B. mit drei Schweißpunkten.

Das Klemmelement K umfasst einen oberen Schenkel 11 und einen unteren Schenkel 12. Der obere Schenkel 11 ist in der Seitenansicht der Fig. 11 wellenförmig gebogen, so dass das Klemmelement K eine Klammerform annimmt. Mit seinem unteren, ebenen Schenkel 12 ist das Klemmelement K an der Oberseite 2.5 des Trägers 2 und jeweils im Bereich zwischen zwei Halteteilen 4 verschweißt. Je nach zu erwartender Belastung können sich die Klemmelemente K mit weitgehend ovalen Durchgangsstanzungen 19 im Träger 2 abwechseln (Fig. 10) oder größere Abstände lassen (Fig. 12).

Der obere Schenkel 11 des Klemmelementes K ist so ausgebildet, dass das freie Ende des oberen Schenkels 11 aufwärts verläuft. Zwischen diesem freien Ende und dem unteren Schenkel 12 wird auf diese Weise eine sich in Richtung auf das Innere des Klemmelementes K sich stetig verengende Einschuböffnung gebildet. Infolge der beschriebenen Ausbildung erleichtert die Einschuböffnung das Aufstecken des Klemmelementes K.

Der obere Schenkel 11 wird wegen der Wellenform elastisch so gebogen, dass er in der Einbaulage unter Vorspannung auf der Tragstruktur 9 aufliegt.

Wie bei den vorigen Ausführungsformen kann das Klemmelement K aus Metall oder einem harten Kunststoff bestehen.

Die Länge des Klemmelementes K entspricht vorteilhaft der Breite des Trägers 2, so dass es nicht über die Längsränder des Trägers 2 vorsteht.

Die Abwehrvorrichtung 1 kann allgemein überall dort eingesetzt werden, wo der Zutritt von Tieren, wie Vögeln, insbesondere von Tauben, in einen Zwischenraum Z verhindert werden soll, der durch mit Abstand übereinanderliegende Elemente gebildet wird.

## Patentansprüche

1. Abwehrvorrichtung (1) zur Abwehr von Tieren, insbesondere von Vögeln, vorzugsweise von Tauben, mit mindestens einem Träger (2), an dem mehrere Halteteile (4) befestigt sind, auf denen jeweils ein Schließteil (5) verstellbar angeordnet ist,
**dadurch gekennzeichnet, dass** das Schließteil (5) zumindest im Bereich seines freien Endes (5a) größere Breite hat als das Halteteil (4).

2. Abwehrvorrichtung nach Anspruch 1,
**dadurch gekennzeichnet, dass** die Halteteile (4) als längliche, vorzugsweise stift-, stab- und/oder stegförmige Teile ausgebildet sind.

3. Abwehrvorrichtung nach Anspruch 1 oder 2,
**dadurch gekennzeichnet, dass** das Schließteil (5) mindestens teilweise als Steckteil zum Verbinden mit dem Halteteil (4) ausgebildet ist.

4. Abwehrvorrichtung nach einem der Ansprüche 1 bis 3.
**dadurch gekennzeichnet, dass** Schließteil (5) rohrförmig ausgebildet ist.

5. Abwehrvorrichtung nach einem der Ansprüche 1 bis 4,
**dadurch gekennzeichnet, dass** das Halteteil (4) und das Schließteil (5) teleskopartig miteinander verbunden sind.

6. Abwehrvorrichtung nach einem der Ansprüche 1 bis 5,
**dadurch gekennzeichnet, dass** die Halteteile (4) einen Durchmesser aufweisen, der im Bereich zwischen etwa 1 mm und etwa 5 mm liegt.

7. Abwehrvorrichtung nach einem der Ansprüche 1 bis 6,
**dadurch gekennzeichnet, dass** zur Lagesicherung der Schließteile (5) an den Halteteilen (4) mindestens ein Sicherungsteil (7) vorgesehen ist, bevorzugt wobei das Sicherungsteil (7) durch ein bandartiges Teil mit einem Haltemittel, vorzugsweise einer Klebemittelschicht, gebildet ist.

8. Abwehrvorrichtung nach Anspruch 7,
**dadurch gekennzeichnet, dass** das Sicherungsteil (7) durch mindestens einen Blockierbereich, wie beispielsweise mindestens eine am Halteteil (4) und/oder am Schließteil (5) vorgesehene Erhabenheit gebildet ist, derart, dass die beiden Teile (4, 5) in montierter Lage mit Reibung aneinander liegen.

9. Abwehrvorrichtung nach einem der Ansprüche 1 bis 8,
**dadurch gekennzeichnet, dass** die Abwehrvorrichtung (1) mindestens ein Klemmelement (K) am Träger (2) aufweist, mit dem die Abwehrvorrichtung (1) an einer Tragestruktur (9) durch Anklemmen befestigt werden kann.

10. Abwehrvorrichtung nach einem der Ansprüche 1 bis 9,
**dadurch gekennzeichnet, dass** der Träger (2) bandförmig ausgebildet ist, insbesondere mit einer Länge größer als 30 cm und/oder einer Breite größer als 1 cm, wobei der Träger (2) bevorzugt aus Metall oder aus Kunststoff, beispielsweise Polycarbonat, gefertigt ist.

11. Abwehrvorrichtung nach einem der Ansprüche 1 bis 10,
**dadurch gekennzeichnet, dass** die Halteteile (4) in einem Winkel zwischen 70° und 110° zur Längsachse (L) des Trägers (2) ausgerichtet sind, insbesondere senkrecht zu dieser Längsachse (L).

12. Abwehrvorrichtung nach einem der Ansprüche 1 bis 11,
**dadurch gekennzeichnet, dass** die Halteteile (4) im Wesentlichen parallel zueinander angeordnet sind.

13. Abwehrvorrichtung nach einem der Ansprüche 1 bis 12,
**dadurch gekennzeichnet, dass** die Halteteile (4) an den Trägern (2) befestigt, wie angeschweißt, angeklebt, angeschraubt oder angenietet oder mittels Befestigungselementen gehalten sind.

14. Verfahren zum Anbringen einer Abwehrvorrichtung nach einem der Ansprüche 1 bis 13 an einer Tragestruktur (9), welche über einer Fläche, insbesondere einem Dach, angeordnet ist, bevorzugt an einer Tragestruktur (9) einer Photovoltaikanlage oder Solarthermieanlage, umfassend die Schritte:
- Anbringen des Trägers (2) an der Tragestruktur (9), so dass die Schließteile (5) der Fläche zugewandt sind,
- Relativverschieben der Schließteile (5) und der Halteteile (4) zueinander, bis zumindest ein Teil der Schließteile (5) die Fläche berührt.

15. Verfahren nach Anspruch 14, zum Anbringen einer Abwehrvorrichtung (1), insbesondere einer Abwehrvorrichtung (1) nach Anspruch 9, **dadurch gekennzeichnet, dass** die Abwehrvorrichtung (1) mittels der Klemmelemente (K) an der Tragestruktur (9) angeklemmt wird.
